# DEMANDE DE BREVET EUROPEEN

(11) **EP 1 744 508 A2**
(43) Date de publication de la demande: **17.01.2007**
(21) Numéro de dépôt: 06291135.9
(22) Date de dépôt: 11.07.2006
(51) Int. Cl.: H04L 12/58, H04L 12/18

(54) **Procédé de mise en relation interpersonnelle**

(30) Priorité: 12.07.2005 FR 0507478
(71) Demandeur: France Telecom S.A., 75015 Paris (FR)
(72) Inventeur: Auvray, Vincent, 14000 Caen (FR); Briand, Olivier, 14000 Caen (FR); Dauguet, Anthony, 14260 Saint Pierre du Fresne (FR)
(74) Mandataire: Bentz, Jean-Paul

(57) **Abrégé**

L'invention concerne un procédé de mise en relation interpersonnelle permettant d'établir une communication entre au moins deux utilisateurs (client1, client2) sur requête de l'un d'eux, en exploitant un état de présence de chaque utilisateur, caractérisé en ce que ledit procédé comprend une étape (E1) de demande de mise en relation dans laquelle un utilisateur paramètre au moins une action de mise en relation entre lui et au moins un autre utilisateur, et une étape (E6) d'activation automatique de ladite action de mise en relation selon les paramètres fixés par l'utilisateur lorsque l'état de présence associé aux utilisateurs concernés par ladite action de mise en relation permet la mise en relation.

## Description

La présente invention concerne de manière générale le domaine des télécommunications. Elle se rapporte plus particulièrement à un procédé de mise en relation interpersonnelle permettant d'établir une communication entre au moins deux utilisateurs sur requête de l'un d'eux en exploitant un état de présence de chaque utilisateur fourni par un système de gestion de présence, typiquement le système de gestion de présence utilisé dans des services de messagerie instantané.

Parmi les services mis en oeuvre dans un réseau de télécommunication comme le réseau Internet, les services de messagerie instantanée permettent un dialogue en direct entre utilisateurs, typiquement au moyen de messages écrits, envoyés et reçus de manière synchrone.

Le serveur de messagerie instantanée est de plus adapté à répertorier un ensemble d'utilisateurs pouvant être mis en communication par messagerie instantanée. Des données d'identification d'utilisateurs sont répertoriées à cet effet dans une entité appelée liste de contacts (« Buddy Lists » selon la terminologie anglo-saxonne), propre à chaque utilisateur du système. Le serveur maintient une base de données BL des listes de contact pour tous les utilisateurs.

A un service de messagerie instantanée est généralement associé un système de gestion de présence, qui offre avantageusement la possibilité aux utilisateurs de consulter la liste des contacts présents avec lesquels ils sont simultanément en ligne, pour communiquer immédiatement avec eux. Le système de gestion de présence permet donc de déterminer, à un instant donné, si un utilisateur est présent ou non sur le service de messagerie instantanée, c'est-à-dire s'il est ou non disponible pour participer à une discussion avec les membres de sa liste de contacts.

Le succès grandissant des services de messagerie instantanée a conduit à adosser à ceux-ci des fonctionnalités supplémentaires, de manière à offrir aux utilisateurs une palette de services de mise en relation interpersonnelle plus évoluée que la simple messagerie instantanée. Le système de messagerie instantanée est donc à même de coopérer avec un ou plusieurs systèmes de mise en relation multimédia S_MR, permettant d'établir une communication entre plusieurs personnes, pouvant être de type audio, audiovisuelle, ou textuelle.

Ces différents services de mise en relation peuvent avantageusement s'interfacer à la fonction de gestion de présence offerte par le service de messagerie instantanée. La mise en relation est donc facilitée puisqu'il est possible d'exploiter l'information de gestion de présence telle qu'elle est fournie par le système de messagerie instantanée. Ainsi, avant d'établir une communication téléphonique par exemple avec un utilisateur présent dans la liste de contacts, il est possible de connaître la disponibilité de son interlocuteur avant d'essayer d'entrer en relation avec lui.

Une architecture de service de messagerie instantanée telle que décrite permet donc de coupler un système de mise en relation, téléphonique, visiophonique ou autre, au système de gestion de présence d'un client de messagerie instantanée. De cette manière, il est permis de gérer la mise en relation par l'intermédiaire du média de communication choisi en fonction de l'état de disponibilité des personnes devant être mises en relation.

Cependant, si l'utilisateur appelant peut effectivement connaître l'état de présence de son interlocuteur avant d'essayer d'entrer en relation avec lui, en cas d'indisponibilité de ce dernier, il n'a aucune information sur la durée de l'indisponibilité et doit donc renouveler ses tentatives de mise en relation jusqu'à ce que l'état de présence de son interlocuteur apparaisse comme disponible.

La présente invention a pour but de remédier à cet inconvénient, en proposant un procédé de mise en relation interpersonnelle, qui libère l'utilisateur des tâches de vérification de la disponibilité de son ou ses interlocuteurs, en lui permettant de paramétrer des actions de mise en relation avec ses interlocuteurs, même quand ils ne sont pas encore disponibles, et d'établir des conditions à la réalisation de ces actions.

Avec cet objectif en vue, l'invention a pour objet un procédé de mise en relation interpersonnelle permettant d'établir une communication entre au moins deux utilisateurs sur requête de l'un d'eux, en exploitant un état de présence de chaque utilisateur, caractérisé en ce que ledit procédé comprend une étape de demande de mise en relation dans laquelle un utilisateur paramètre au moins une action de mise en relation entre lui et au moins un autre utilisateur, et une étape d'activation automatique de ladite action de mise en relation selon les paramètres fixés par l'utilisateur lorsque l'état de présence associé aux utilisateurs concernés par ladite action de mise en relation permet la mise en relation.

De préférence, l'étape de demande de mise en relation consiste à définir, pour chaque action de mise en relation, les utilisateurs concernés par ladite action de mise en relation et un mode de communication entre eux.

De préférence, l'étape de demande de mise en relation consiste à définir, pour chaque action de mise en relation, une plage horaire durant laquelle ladite action de mise en relation peut être activée automatiquement.

Avantageusement, le procédé comprend une étape d'interrogation à intervalles réguliers de l'état de présence des utilisateurs concernés par ladite action.

L'invention concerne encore un dispositif apte à délivrer des services de communication à une pluralité d'utilisateurs dotés chacun d'une entité client en exploitant un état de présence de chaque utilisateur délivré par un système de gestion de présence, ledit dispositif de service de communication étant caractérisé en ce qu'il comprend des moyens de réception d'actions de mise en relation entre utilisateurs, paramétrées par au moins un utilisateur au moyen de son entité cliente connectée audit dispositif de service de communication, et des moyens de gestion de chaque action de mise en relation reçue par ledit dispositif de service de communication, selon les paramètres fixés par l'utilisateur lorsque l'état de présence associé aux utilisateurs concernés par ladite action de mise en relation permet la mise en relation.

Avantageusement, les moyens de gestion des actions de mise en relation reçues par ledit dispositif comprennent des moyens pour interroger à intervalles réguliers le système de gestion de présence, de manière à obtenir les états de présence des utilisateurs concernés et à déclencher automatiquement la mise en relation selon les paramètres fixés lorsque les états de présence obtenus permettent la mise en relation.

De préférence, les paramètres de mise en relation fixés par l'utilisateur comprennent l'identification des utilisateurs concernés par la mise en relation et le mode de communication à établir entre eux.

Selon un mode de réalisation, le dispositif de service de communication comprend un serveur de messagerie instantanée apte à délivrer des services de messagerie instantanée à ladite pluralité d'utilisateurs dotés chacun d'une entité cliente de messagerie instantanée pour la connexion et l'échange de messages avec ledit serveur.

Selon une variante, ledit serveur de messagerie instantanée coopère avec un système de mise en relation multimédia comprenant des moyens d'établissement d'une communication de type téléphonie et/ou visiophonie.

L'invention concerne encore une entité cliente apte à communiquer avec un dispositif de service de communication prévu pour mettre en relation une pluralité d'utilisateurs dotés chacun d'une entité cliente en exploitant un état de présence de chaque utilisateur fourni par un système de gestion de présence, ladite entité cliente étant caractérisée en ce qu'elle comprend des moyens pour paramétrer au moins une action de mise en relation avec d'autres entités clientes, et des moyens pour requérir l'activation automatique de ladite action de mise en relation par ledit dispositif selon les paramètres fixés par l'utilisateur lorsque l'état de présence associé aux utilisateurs concernés par ladite action de mise en relation permet la mise en relation.

L'invention concerne encore un programme d'ordinateur prévu pour être mis en oeuvre sur un dispositif apte à délivrer des services de communication à une pluralité d'utilisateurs dotés chacun d'une entité cliente en exploitant un état de présence de chaque utilisateur délivré par un système de gestion de présence, ledit programme étant caractérisé en ce qu'il comprend des instructions logicielles pour traiter la réception par ledit dispositif de service de communication d'actions de mise en relation entre utilisateurs, paramétrées par au moins un utilisateur au moyen de son entité cliente connectée audit dispositif de service de communication, et des instructions logicielles pour activer automatiquement chaque action de mise en relation reçue par ledit dispositif de service de communication, selon les paramètres fixés par l'utilisateur lorsque l'état de présence associé aux utilisateurs concernés par ladite action de mise en relation permet la mise en relation.

L'invention concerne encore un programme d'ordinateur prévu pour être mis en oeuvre sur une entité cliente apte à communiquer avec un dispositif de service de communication prévu pour mettre en relation une pluralité d'utilisateurs dotés chacun d'une entité cliente en exploitant un état de présence de chaque utilisateur fourni par un système de gestion de présence, ledit programme étant caractérisée en ce qu'il comprend des instructions logicielles pour effectuer le paramétrage d'au moins une action de mise en relation avec d'autres entités clientes, et des instructions pour requérir l'activation automatique de ladite action de mise en relation par ledit dispositif selon les paramètres fixés par l'utilisateur lorsque l'état de présence associé aux utilisateurs concernés par ladite action de mise en relation permet la mise en relation.

L'invention concerne enfin un procédé pour établir un mode de communication entre au moins un premier utilisateur et au moins un deuxième utilisateur, lesdits utilisateurs dotés d'une entité cliente apte à établir un premier mode de communication via un premier système de télécommunication, ledit système comprenant des moyens permettant de déterminer un état de présence desdits utilisateurs auprès dudit système, caractérisé en ce que ledit procédé comprend:
- une étape de paramétrage dans laquelle ledit premier utilisateur paramètre au moins un deuxième mode de communication entre lui et ledit deuxième utilisateur, ledit système coopérant avec un deuxième système de télécommunication pour établir ledit deuxième mode de communication et
- une étape d'activation automatique dudit deuxième mode de communication en fonction dudit état de présence.

Un exemple du première mode de communication est l'échange des messages via un système de messagerie instantanée.

Un exemple du deuxième mode de communication est une liaison téléphonique.

D'autres caractéristiques et avantages de la présente invention apparaîtront plus clairement à la lecture de la description suivante donnée à titre d'exemple illustratif et non limitatif et faite en référence à la figure unique annexée:

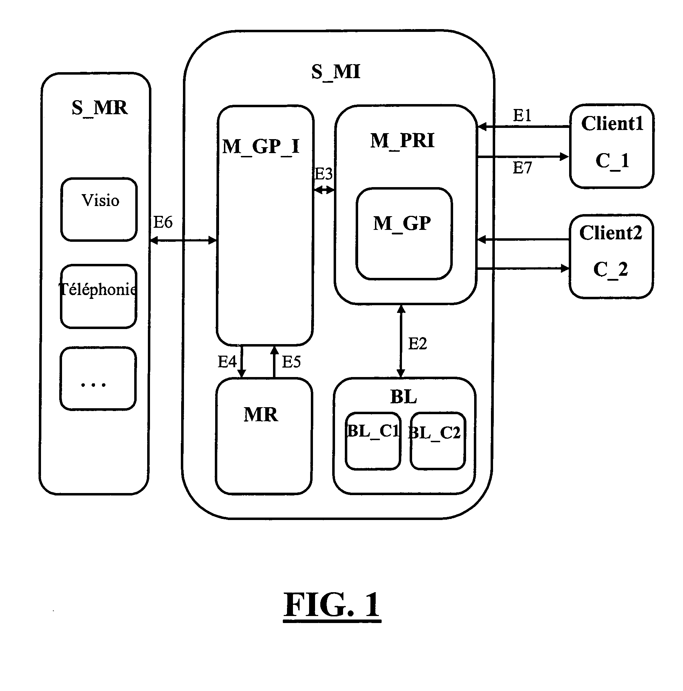

- figure 1, qui illustre l'architecture fonctionnelle d'un système de mise en relation interpersonnelle selon la présente invention.

La description qui va suivre va plus particulièrement être réalisée en référence à un dispositif de service de communication basé sur un serveur de messagerie instantané couplé de préférence à un système de mise en relation multimédia. Toutefois, d'autres dispositifs de service de communication dotés de moyens de gestion de présence pourraient être envisagés sans pour autant sortir du cadre de la présente invention. Ainsi, la présente invention pourrait s'appliquer par exemple aux réseaux locaux disposant d'une borne telle que Bluetooth, Wi-Fi, etc. En effet, les systèmes de communication à courte portée du type Bluetooth ou Wi-Fi peuvent être aptes à détecter l'entrée/sortie d'un terminal utilisateur dans la zone qu'ils couvrent. Dans ce contexte, la gestion de présence est donc mise en oeuvre en détectant la présence d'un terminal utilisateur dans la zone de la borne.

En référence à la figure 1, le mode de réalisation de l'invention est plus particulièrement basé sur un dispositif S_MI apte à délivrer des services de communication de type service de messagerie instantanée. Selon une variante de l'invention, le dispositif de type serveur de messagerie instantanée S_MI coopère avec un système de mise en relation multimédia S_MR. De cette manière, les différents services de mise en relation proposés pourront avantageusement s'interfacer à la fonction de gestion de présence M_GP, intégrée à un module principal de messagerie instantanée M_PRI du serveur S_MI. Pour ce faire, un module d'interface M_GP_I est prévu entre le module principal de messagerie instantanée M_PRI et le ou les module S_MR de mise en relation.

Ainsi, ces éléments précédemment cités étant couplés, un tel système permet de gérer la mise en relation multimédia interpersonnelle, par exemple de type téléphonique et/ou visiophonique mais aussi la mise en relation par messagerie instantanée, selon l'état de disponibilité de l'appelé ainsi que de l'appelant.

Selon l'exemple de la figure 1, un groupe d'utilisateurs Client1 et Client2, disposant chacun de moyens logiciels et matériels adaptés, dits dans la suite entité cliente C_1 et entité cliente C_2, peuvent établir une communication entre eux à travers le réseau via la connexion au serveur S_MI de messagerie instantanée. La base de données BL stocke la liste de contacts BL_C1 de l'utilisateur client1 avec les données d'identification de l'utilisateur Client2 et la liste de contacts BL_C2 de l'utilisateur client2 avec les données d'identification de l'utilisateur Client1.

L'utilisateur Client1, désirant communiquer avec l'un des contacts inscrits sur sa liste de contacts, en l'occurrence Client2, peut donc à tout moment émettre une requête en ce sens au serveur de messagerie. Une telle requête sera traitée par le module principal de messagerie instantanée M_PRI, qui permet la gestion de présence.

Typiquement, la mise en relation demandée est prévue pour s'établir immédiatement si l'utilisateur appelé est disponible au moment où l'utilisateur appelant demande à être mis en relation, cette information de disponibilité étant obtenu à partir des états de présence de différents utilisateurs faisant partie de la liste de contacts de l'utilisateur appelant, qui s'affichent au niveau de l'entité cliente de celui-ci.

L'invention permet en outre aux utilisateurs du système de configurer une liste d'actions de mise en relation avec les autres utilisateurs, de manière à ce que ces actions, une fois configurées, puissent être déclenchées automatiquement sous les conditions établies par les utilisateurs, lorsque l'état de présence associé aux utilisateurs concernés par ces actions de mise en relation permet la mise en relation.

Un tel mode de fonctionnement pourra notamment permettre à un utilisateur de définir qu'une mise en relation s'établira ultérieurement, dans des conditions pouvant être fixées, dès que l'état de présence de l'utilisateur appelé passe d'un état « indisponible » à un état « disponible » après que l'utilisateur appelant a demandé à être mis en relation, l'utilisateur appelant devant également être dans un état disponible pour ce faire.

Plusieurs demandes de mises en relation peuvent ainsi être demandées et configurées par un utilisateur appelant, de sorte qu'il devient possible pour lui de gérer avec souplesse et efficacité différentes actions de mise en relation. Cette gestion pourra avantageusement s'effectuer au travers d'une interface particulière de l'entité cliente de l'utilisateur, permettant de présenter à l'utilisateur la liste des actions de mise en relation qu'il a configurées, passées et en cours. Les actions de mise en relation définies par l'utilisateur peuvent également être ajoutées, supprimées ou modifiées au travers de l'interface.

Les paramètres de configuration des actions de mise en relation peuvent se rapporter à l'identification des utilisateurs concernés par l'action de mise en relation ainsi qu'au mode de communication entre les utilisateurs, qui peut être choisi parmi le service de messagerie instantanée ou bien, selon la variante, parmi les modes de mise en relation proposés par le système de mise en relation multimédia S_MR coopérant avec le serveur de messagerie instantanée.

Les modes de mise en relation entre utilisateurs proposés par le système de mise en relation S_MR comprennent par exemple un mode de mise en relation par téléphonie, ou encore un mode de mise en relation par visiophonie.

Les paramètres de configuration des actions de mise en relation peuvent également se rapporter, pour chaque action de mise en relation enregistrée par un utilisateur, à la définition d'une plage horaire durant laquelle l'action de mise en relation peut être activée automatiquement lorsque l'état des utilisateurs permet cette mise en relation. L'utilisateur peut ainsi paramétrer l'instant à partir duquel l'activation de l'action de mise en relation est possible et l'instant à partir duquel l'activation de l'action de mise en relation n'est plus possible.

Pour mettre en oeuvre ce mode de fonctionnement, le serveur de messagerie S_MI intègre un module MR de gestion des actions de mise en relation enregistrées par les utilisateurs du système. Ce module est prévu pour coopérer avec le module d'interface M_GP_I prévu entre le module principal de messagerie M_PRI et le système de mise en relation S_MR.

Ce module MR offre donc au serveur de messagerie instantanée des moyens d'enregistrement d'actions de mise en relation entre utilisateurs, qui sont paramétrées directement sur le serveur par les utilisateurs au moyen de leur entité cliente connectée au serveur, ainsi que des moyens de gestion de ces actions de mise en relation enregistrées sur le serveur, selon les paramètres fixés par les utilisateurs, en liaison avec l'état de présence associé aux utilisateurs concernés par ces actions de mise en relation. Pour ce faire, pour chaque action de mise en relation configurée et enregistrée sur le serveur, le module de gestion MR est prévu pour interroger à intervalles réguliers le module de gestion de présence M_GP du serveur de messagerie instantanée, de manière à pouvoir déclencher automatiquement la mise en relation dans les conditions de mise en relation paramétrées par l'utilisateur, lorsque les états de présence obtenus en réponse aux requêtes d'interrogation du module de gestion de présence permettent la mise en relation, typiquement lorsque les états de présence des utilisateurs appelants et appelés sont définis comme étant disponibles.

La configuration d'une action au sein du module de gestion MR du serveur de messagerie instantanée S_MI s'effectue donc par l'intermédiaire d'une entité cliente de messagerie instantanée directement sur le serveur de messagerie instantanée et se déroule de la manière suivante :

L'entité cliente C_1 s'adresse au serveur de messagerie instantanée pour définir une action de mise en relation dans sa liste de mise en relation. Pour cela, l'utilisateur peut utiliser une fonction « ajouter » d'un menu du client de messagerie instantanée dédié à la gestion des mises en relations du client avec d'autres clients.

Cette action de mise en relation peut par exemple concerner une demande de mise en relation avec l'entité cliente C_2. En référence à la figure 1, l'entité cliente C_1 émet alors en E1 une requête à cet effet de configuration d'une action de mise en relation à destination du serveur de messagerie instantanée. De manière générale, une telle requête contient principalement le ou les utilisateurs appelés, l'utilisateur appelant, l'action (mise en relation) et le mode de communication utilisé entre les utilisateurs, téléphonique par exemple.

Voici un exemple de mise en oeuvre d'une requête de ce type, dans le cadre du protocole de messagerie instantanée XMPP (sigle signifiant « eXtensible Messaging and Presence protocol » en anglais), pour la demande du client C_1 d'être mis en relation avec le client C_2 en mode téléphonique :
<xmpp expediteur= « C_1 » destinataire= « C_2 » action= « mise en relation » mode= « telephonique » msg= « »/>

D'autres paramètres pourraient également être fixés par l'utilisateur, se rapportant notamment à la plage horaire durant laquelle l'action de mise en relation peut être activée automatiquement lorsque l'état de disponibilité du destinataire permet cette mise en relation.

Cette requête va être prise en charge par le module principal de messagerie instantanée M_PRI, qui va tout d'abord vérifier en E2 que l'utilisateur du client C_1 fait bien partie de la liste de contact de l'utilisateur du client C_2 et réciproquement. Si c'est le cas, le module principal M_PRI fait suivre en E3 la requête au module d'interface M_GP_I entre le module principal de messagerie instantanée, le module de gestion et le système de mise en relation, pour être transmise en E4 au module de gestion MR. Le module de gestion MR ajoute alors l'action ainsi paramétrée dans la liste d'actions de l'utilisateur de l'entité cliente C_1.

Ensuite, en E5, le module de gestion MR requête à intervalles réguliers, par l'intermédiaire du module d'interface M_GP_I avec le module principal de messagerie M_PRI, le module de gestion de présence M_GP du serveur de messagerie instantanée, afin de connaître les états de disponibilité associés aux utilisateurs concernés, à savoir l'utilisateur appelant de l'entité cliente C_1 et l'utilisateur appelé de l'entité cliente C_2. Tant que l'utilisateur appelant et/ou l'utilisateur appelé sont définis comme étant dans un état indisponible, cette phase continue.

Lorsque toutes les conditions de la demande de mise en relation paramétrée par l'utilisateur du client C_1 sont remplies, c'est-à-dire que l'appelant et l'appelé sont disponibles et éventuellement que l'on se trouve dans la plage horaire indiquée pour l'activation automatique de l'action, alors le module d'interface M_GP_I demande en E6 à ce que les clients C_1 et C_2 soient mis automatiquement en relation. Il communique pour ce faire au système de mise en relation S_MR les informations de mise en relation qui lui sont nécessaires, et notamment les numéros de téléphone pour joindre les utilisateurs des clients C_1 et C_2, puisqu'une mise en relation téléphonique a été demandée. Ces informations nécessaires au système pour la mise en relation sont stockées dans le profil utilisateur sur le serveur de messagerie instantanée lors de la phase de création des comptes utilisateurs.

Une fois la mise en relation réalisée avec succès, un acquittement est retourné par le système de mise en relation au module d'interface M_GP_I, qui fait alors passer l'action correspondante d'un état « en cours » à un état « terminé » dans le module MR de gestion des actions de mise en relation. Cet état mis à jour est transmis en E7 au client C_1. L'interface particulière de l'entité cliente C_1 comprend en effet des moyens pour présenter à l'utilisateur la liste des actions de mise en relation qu'il a configurées sur le serveur, avec leur statut « terminée » et « en cours », ainsi que les détails de ces actions, correspondant aux différents paramètres rentrés par l'utilisateur se rapportant par exemple au mode de mise en relation, à l'instant à partir duquel l'activation de l'action de mise en relation est possible, à l'instant à partir duquel l'action de mise en relation n'est plus possible...

## Revendications

1. Procédé de mise en relation interpersonnelle permettant d'établir une communication entre au moins deux utilisateurs (client1, client2) sur requête de l'un d'eux, en exploitant un état de présence de chaque utilisateur, **caractérisé en ce que** ledit procédé comprend une étape (E1) de demande de mise en relation dans laquelle un utilisateur paramètre au moins une action de mise en relation entre lui et au moins un autre utilisateur, et une étape (E6) d'activation automatique de ladite action de mise en relation selon les paramètres fixés par l'utilisateur lorsque l'état de présence associé aux utilisateurs concernés par ladite action de mise en relation permet la mise en relation.

2. Procédé selon la revendication 1, **caractérisé en ce que** l'étape (E1) de demande de mise en relation consiste à définir, pour chaque action de mise en relation, les utilisateurs concernés par ladite action de mise en relation et un mode de communication entre eux.

3. Procédé selon la revendication 1 ou 2,
**caractérisé en ce que** l'étape (E1) de demande de mise en relation consiste à définir, pour chaque action de mise en relation, une plage horaire durant laquelle ladite action de mise en relation peut être activée automatiquement.

4. Procédé selon l'une quelconque des revendications précédentes, **caractérisé en ce que** le procédé comprend une étape (E5) d'interrogation à intervalles réguliers de l'état de présence des utilisateurs concernés par ladite action.

5. Dispositif (S_MI) apte à délivrer des services de communication à une pluralité d'utilisateurs (Client1, Client2) dotés chacun d'une entité client (C_1, C_2) en exploitant un état de présence de chaque utilisateur délivré par un système de gestion de présence (M_GP), ledit dispositif de service de communication (S_MI) étant **caractérisé en ce qu'**il comprend des moyens (MR) de réception d'actions de mise en relation entre utilisateurs, paramétrées par au moins un utilisateur au moyen de son entité cliente connectée audit dispositif de service de communication, et des moyens (MR) de gestion de chaque action de mise en relation reçue par ledit dispositif de service de communication, selon les paramètres fixés par l'utilisateur lorsque l'état de présence associé aux utilisateurs concernés par ladite action de mise en relation permet la mise en relation.

6. Dispositif selon la revendication 5,
**caractérisé en ce que** les moyens (MR) de gestion des actions de mise en relation reçues par ledit dispositif comprennent des moyens pour interroger à intervalles réguliers le système de gestion de présence (M_GP), de manière à obtenir les états de présence des utilisateurs concernés et à déclencher automatiquement la mise en relation selon les paramètres fixés lorsque les états de présence obtenus permettent la mise en relation.

7. Dispositif selon la revendication 5 ou 6,
**caractérisé en ce que** les paramètres de mise en relation fixés par l'utilisateur comprennent l'identification des utilisateurs concernés par la mise en relation et le mode de communication à établir entre eux.

8. Dispositif selon l'une quelconque des revendications 5 à 7, **caractérisé en ce qu'**il comprend un serveur de messagerie instantanée (S_MI) apte à délivrer des services de messagerie instantanée à ladite pluralité d'utilisateurs (Client1, Client2) dotés chacun d'une entité cliente (C_1, C_2) de messagerie instantanée pour la connexion et l'échange de messages avec ledit serveur.

9. Dispositif selon la revendication 8,
**caractérisé en ce que** ledit serveur de messagerie instantanée (S_MI) coopère avec un système de mise en relation multimédia (S_MR) comprenant des moyens d'établissement d'une communication de type téléphonie et/ou visiophonie.

10. Entité cliente (C_1, C_2) apte à communiquer avec un dispositif de service de communication (S_MI) prévu pour mettre en relation une pluralité d'utilisateurs dotés chacun d'une entité cliente en exploitant un état de présence de chaque utilisateur fourni par un système de gestion de présence (M_GP), ladite entité cliente étant **caractérisée en ce qu'**elle comprend des moyens pour paramétrer au moins une action de mise en relation avec d'autres entités clientes, et des moyens pour requérir l'activation automatique de ladite action de mise en relation par ledit dispositif (S_MI) selon les paramètres fixés par l'utilisateur lorsque l'état de présence associé aux utilisateurs concernés par ladite action de mise en relation permet la mise en relation.

11. Programme d'ordinateur prévu pour être mis en oeuvre sur un dispositif (S_MI) apte à délivrer des services de communication à une pluralité d'utilisateurs (Client1, Client2) dotés chacun d'une entité cliente (C_1, C_2) en exploitant un état de présence de chaque utilisateur délivré par un système de gestion de présence (M_GP), ledit programme étant **caractérisé en ce qu'**il comprend des instructions logicielles pour traiter la réception par ledit dispositif de service de communication d'actions de mise en relation entre utilisateurs, paramétrées par au moins un utilisateur au moyen de son entité cliente connectée audit dispositif de service de communication, et des instructions logicielles pour activer automatiquement chaque action de mise en relation reçue par ledit dispositif de service de communication, selon les paramètres fixés par l'utilisateur lorsque l'état de présence associé aux utilisateurs concernés par ladite action de mise en relation permet la mise en relation.

12. Programme d'ordinateur prévu pour être mis en oeuvre sur une entité cliente (C_1, C_2) apte à communiquer avec un dispositif de service de communication (S_MI) prévu pour mettre en relation une pluralité d'utilisateurs dotés chacun d'une entité cliente en exploitant un état de présence de chaque utilisateur fourni par un système de gestion de présence (M_GP), ledit programme étant **caractérisée en ce qu'**il comprend des instructions logicielles pour effectuer le paramétrage d'au moins une action de mise en relation avec d'autres entités clientes, et des instructions pour requérir l'activation automatique de ladite action de mise en relation par ledit dispositif (S_MI) selon les paramètres fixés par l'utilisateur lorsque l'état de présence associé aux utilisateurs concernés par ladite action de mise en relation permet la mise en relation.

13. Procédé pour établir un mode de communication entre au moins un premier utilisateur (client1) et au moins un deuxième utilisateur (client2), lesdits utilisateurs dotés d'une entité cliente (C_1, C_2) apte à établir un premier mode de communication via un premier système de télécommunication (S_MI), ledit système comprenant des moyens (M_GP) permettant de déterminer un état de présence desdits utilisateurs (client1, client2) auprès dudit système (S_MI), **caractérisé en ce que** ledit procédé comprend:
- une étape (E1) de paramétrage dans laquelle ledit premier utilisateur paramètre au moins un deuxième mode de communication entre lui et ledit deuxième utilisateur, ledit système (S_MI) coopérant avec un deuxième système de télécommunication (S_MR) pour établir ledit deuxième mode de communication et
- une étape (E6) d'activation automatique dudit deuxième mode de communication en fonction dudit état de présence.
